# EUROPÄISCHE PATENTANMELDUNG

(11) **EP 3 736 357 A1**
(43) Veröffentlichungstag der Anmeldung: **11.11.2020**
(21) Anmeldenummer: 19173103.3
(22) Anmeldetag: 07.05.2019
(51) Int. Cl.: C23C 18/20, C23C 18/30, B05D 3/10, C08J 7/14, C23C 18/16, C23C 18/32, C25D 5/12, C25D 5/56

(54) **VERFAHREN ZUR SULFONIERUNG VON KUNSTSTOFFEN FÜR DIE CHEMISCHE METALLISIERUNG MIT SO3 UND SO2**

(71) Anmelder: Dr.Ing. Max Schlötter GmbH & Co. KG, 73312 Geislingen (DE)
(72) Erfinder: Henne, Stefan, 89143 Blaubeuren (DE); Holl, Sebastian, 89077 Ulm (DE)
(74) Vertreter: Hoffmann Eitle

(57) **Zusammenfassung**

Die Erfindung betrifft ein Verfahren zur Sulfonierung eines Kunststoffteils. Das Verfahren umfasst gemäß einer Variante (A) das Trocknen eines Kunststoffteils; und (B) das Behandeln des getrockneten Kunststoffteils mit einem Gasgemisch, enthaltend SO₂ und SO₃. Die Konzentration von SO₂ in dem Gasgemisch von Schritt (B) beträgt mindestens 5 mg/dm³ und die Konzentration von SO₃ in dem Gasgemisch von Schritt (B) beträgt mindestens 10 mg/dm³. Gemäß einer weiteren Variante umfasst das Verfahren (a) das Trocknen eines Kunststoffteils; (b1) das Behandeln des getrockneten Kunststoffteils mit einem ersten Gasgemisch, enthaltend SO₂; und dann (b2) das Behandeln des Kunststoffteils mit einem zweiten Gasgemisch, enthaltend SO₃. Die Konzentration von SO₂ in dem ersten Gasgemisch von Schritt (b1) beträgt mindestens 5 mg/dm³ und die Konzentration von SO₃ in dem zweiten Gasgemisch von Schritt (b2) beträgt mindestens 10 mg/dm³. Des Weiteren betrifft die Erfindung ein Verfahren zur Herstellung eines metallisierten Kunststoffteils, das ein so sulfoniertes Kunststoffteil verwendet. Mit den Verfahren lassen sich Kunststoffteile gleichmäßig sulfonieren bzw. Kunststoffteile mit einem gleichmäßigen Metallüberzug erzeugen.

## Beschreibung

### Technisches Gebiet

Die Erfindung betrifft ein Verfahren zur Sulfonierung eines Kunststoffteils und ein Verfahren zur Herstellung eines metallisierten Kunststoffteils, das ein so sulfoniertes Kunststoffteil verwendet.

### Technischer Hintergrund

Metallisierte Kunststoffe, also Kunststoffe mit einem Metallüberzug, werden in vielen Bereichen eingesetzt. Bei den metallisierten Kunststoffen werden die Vorteile von Kunststoffen, wie z.B. ein geringes Gewicht, Unempfindlichkeit gegenüber Korrosion und eine preiswerte Herstellung durch Spritzgießen, mit den vorteilhaften Eigenschaften von Metallen, wie eine hohe Reflexion, Abriebfestigkeit, elektrische Leitfähigkeit und eine ansprechende ästhetische Oberfläche, kombiniert.

Ein wesentlicher Aspekt bei der Herstellung von metallisierten Kunststoffen ist, dass die Metallschicht gut auf der Kunststoffoberfläche haftet. Weil eine direkte Bindung zwischen Kunststoff und Metallschicht nicht möglich ist und sich Kunststoffoberfläche und Metallschicht gegenseitig abstoßen, muss die Kunststoffoberfläche zunächst funktionalisiert bzw. aktiviert werden, um eine ausreichende Haftung der Metallschicht auf der Kunststoffoberfläche zu erreichen.

Bei der Funktionalisierung wird der Kunststoff sowohl chemisch als auch mechanisch funktionalisiert, indem polare funktionelle Gruppen eingeführt werden und die Oberfläche aufgeraut wird. So entstehen z.B. durch die Funktionalisierung auf der Kunststoffoberfläche Mikrokavitäten und eine Rauheit, die eine mechanische Verankerung des Metallfilms ermöglichen.

Um den Kunststoff zu metallisieren, erfolgt nach der Funktionalisierung zunächst ein Bekeimen, bei dem Metallkeime auf der Kunststoffoberfläche abgeschieden werden. Hierfür können Metallkolloide, z.B. ein Pd/Sn-Kolloid eingesetzt werden. Alternativ können auch Edelmetallionen, wie z.B. Pd-Ionen aufgebracht und dann reduziert werden, um die Kunststoffoberfläche zu bekeimen. Nach dem Bekeimen kann dann eine erste Metallschicht, z.B. aus Cu oder Ni chemisch, also stromlos, abgeschieden werden. Diese stromlos abgeschiedene Metallschicht ist elektrisch leitfähig, was es ermöglicht, eine oder mehrere weitere Metallschichten, z.B. aus Chrom, Kupfer, Nickel oder Gold, galvanisch oder chemisch darauf abzuscheiden.

Bei herkömmlichen Verfahren wird die Funktionalisierung oftmals mit flüssigen Beizmedien, wie z.B. Chromsäuremischungen, durchgeführt. Allerdings erfordert die Verwendung von Chromsäuremischungen einen hohen arbeitsschutztechnischen Aufwand, weil die eingesetzten Chrom(VI)-Verbindungen hochtoxisch sind und als krebserregend gelten. Dementsprechend ist der Einsatz von Chrom(VI)-Verbindungen durch die Einführung der europäischen Chemikalienverordnung REACH eingeschränkt worden. Daher ist es notwendig, alternative Verfahren zur Funktionalisierung von Kunststoffen für die nachfolgende Metallisierung bereitzustellen.

Eine Alternative zur Funktionalisierung mit Chromsäuremischungen ist die Funktionalisierung mit SO₃. Mit anderen Worten, die Sulfonierung von Kunststoffen stellt eine Funktionalisierung der Kunststoffoberfläche für die Metallisierung dar. Die Funktionalisierung wird manchmal auch als Aktivierung oder Konditionierung des Kunststoffs bezeichnet.

Die Sulfonierung von Kunststoffoberflächen mit SO₃ in der Gasphase ist als Alternative zur Verwendung von Chromsäuremischungen bei der Kunststoffvorbehandlung für die Metallisierung aus DE 21 26 781 C1 bekannt. Gasförmiges SO₃ wird dabei aus Oleum freigesetzt oder durch Verdampfen von reinem SO₃ bereitgestellt.

Eine andere Art der SO₃-Bereitstellung ist in DE 10 2013 201 910 A1 beschrieben. Dabei wird SO₃ durch Umsetzen von Schwefeldioxid mit Sauerstoff in Gegenwart eines Platin- oder Vanadiumpentoxid-Katalysators typischerweise mit einer Umsatzrate von 99,5 - 99,8% hergestellt. Ein solches Verfahren ist aus der Schwefelsäureherstellung auch als Kontaktverfahren oder Doppelkontaktverfahren bekannt.

Bei der Funktionalisierung von Kunststoffen mit SO₃ ist es notwendig, unter weitgehend wasserfreien Bedingungen zu arbeiten, um die Bildung von störender Schwefelsäure zu vermeiden. Die Schwefelsäure muss sonst aufwendig aus dem Reaktionsraum entfernt werden. Andernfalls kann es zu Überätzungen durch die Schwefelsäure auf der Kunststoffoberfläche und dadurch zur Bildung von Fehlstellen bei der Funktionalisierung kommen. Zudem kann sich die Schwefelsäure auch korrosiv auf die Apparatur auswirken.

Um wasserfreie Bedingungen zu erhalten, werden trockene Gasgemische für die Sulfonierung eingesetzt und die Kunststoffteile vor der Sulfonierung getrocknet.

Allerdings kann es bei dem Arbeiten unter wasserfreien Bedingungen zur elektrostatischen Aufladung bzw. zu einer statischen Oberflächenspannung auf dem Kunststoffteil kommen. Die elektrostatische Aufladung kann dabei durch verschiedene Prozesse, wie mechanische Belastung, Reibung oder Influenz entstehen. Eine elektrostatische Aufladung ist aus mehreren Gründen bei der Sulfonierung problematisch. Zum Beispiel können sich auf den geladenen Kunststoffoberflächen Staubpartikel anlagern. Insbesondere auf den nach oben liegenden Oberflächen lagern sich dann vermehrt Partikel an. Durch die Staubpartikel auf der Kunststoffoberfläche kann die Funktionalisierung mit SO₃ gestört werden, was zu einer ungleichmäßigen Funktionalisierung führt. Eine ungleichmäßige Funktionalisierung kann wiederum zu einer ungleichmäßigen Metallisierung führen, die insbesondere bei hochdekorativen Oberflächen zum Ausschuss der Ware führen kann.

Weiterhin wurde beobachtet, dass die Sulfonierung von elektrostatisch aufgeladenen Kunststoffoberflächen selbst unter staubfreien Bedingungen zu einer ungleichmäßigen Funktionalisierung führen kann. Während entladene Kunststoffoberflächen nach der Konditionierung in der Regel glatte und gleichmäßig chemisch metallisierte Oberflächen aufweisen, welche sich für die anschließende galvanische Metallbeschichtung eignen, zeigen elektrostatisch aufgeladene Kunststoffbauteile deutliche Defekte nach der Galvanisierung. Die Defekte präsentieren sich dabei z.B. durch leichte bis starke Rauigkeiten, eine ungleichmäßige und fleckige Optik der Metallschicht, bis hin zu teilweise unbedeckten oder überätzten Stellen. Mit anderen Worten, elektrostatisch aufgeladene Kunststoffbauteile können zu einer ungleichmäßigen Funktionalisierung und dadurch zu einer ungleichmäßigen Metallisierung führen.

Um diese Probleme zu vermeiden, werden getrocknete Kunststoffteile üblicherweise vor der Funktionalisierung entladen, z.B. mittels eines Ionisierungsgebläses, und von anhaftenden Partikeln durch Abblasen gereinigt. Diese Vorgehensweise ist z.B. in DE 37 11 777, DE 101 40 906 und EP 1 882 531 A2 beschrieben.

Bei der Reinigung und Entladung mittels eines Ionisierungsgebläses werden positiv und negativ geladene Ionen durch Ionisierung von Luft erzeugt und mittels Luftströmung auf die Kunststoffteile geblasen. Dadurch werden elektrostatische Ladungen auf dem Kunststoffteil neutralisiert und eventuell anhaftende Partikel entfernt. Die Kunststoffteile sind dabei üblicherweise auf Gestellen oder Gittern angeordnet, um diese von allen Seiten entionisieren zu können.

Eine Reinigung und Entladung der Kunststoffoberflächen mittels eines Ionisierungsgebläses ist allerdings mit einem erhöhten Arbeitsaufwand verbunden, weil sorgfältig darauf zu achten ist, dass alle Oberflächen der Kunststoffteile in der ionisierten Atmosphäre entladen werden können. Mögliche Fehlerquellen bei der Entionisierung bzw. der Anordnung des Ionisierungsgebläses sind u.a. eine Abschirmung der Kunststoffteile auf den Gestellen oder Gittern untereinander und ungleichmäßige Luftströmungen. Diese möglichen Fehlerquellen erfordern eine regelmäßige Überprüfung des Aufbaus des Entionisierungsbereichs, da es sonst zu unzureichender Ionisierung und damit zu ungleichmäßiger Funktionalisierung aufgrund von haftenden Partikeln oder unzureichend entladenen Kunststoffteilen kommen kann. Eine unzureichende Funktionalisierung kann wiederum zu einer ungleichmäßigen Metallisierung und damit zu Ausschuss bei der Herstellung metallisierter Kunststoffteile führen.

Selbst bei einer sorgfältigen Durchführung der Entionisierung können dennoch Probleme bei der Sulfonierung der Kunststoffteile durch elektrostatische Aufladungen auftreten. Diese Probleme rühren daher, dass die Kunststoffteile nach der Entionisierung in eine andere Reaktionskammer bzw. einen anderen Reaktionsraum zur anschließenden Sulfonierung überführt werden müssen. Während dieser Überführung können die Kunststoffteile erneut durch äußere Einflüsse, wie mechanische Belastung, Reibung oder Influenz, in einer nicht ionisierten Atmosphäre elektrostatisch aufgeladen werden. Diese elektrostatische Aufladung kann dann wiederum zu nicht gleichmäßig funktionalisierten Kunststoffoberflächen und damit zu ungleichmäßig metallisierten Kunststoffteilen führen.

### Zusammenfassung der Erfindung

Der Erfindung liegt die Aufgabe zugrunde, ein Verfahren zur Sulfonierung eines Kunststoffteils bereitzustellen, mit dem Kunststoffteile gleichmäßig sulfoniert werden können, und die sulfonierten Kunststoffteile dadurch auch eine gleichmäßige Metallisierung ermöglichen. Eine weitere Aufgabe ist es, ein Verfahren zur Herstellung eines metallisierten Kunststoffteils bereitzustellen, welches ein so sulfoniertes Kunststoffteil verwendet.

Diese Aufgaben werden durch das Verfahren zur Sulfonierung eines Kunststoffteils und das Verfahren zur Herstellung eines metallisierten Kunststoffteils gemäß den unabhängigen Ansprüchen gelöst. Vorteilhafte Ausgestaltungen sind nachfolgend und in den abhängigen Ansprüchen beschrieben.

### Detaillierte Beschreibung

(1) Es wird ein Verfahren zur Sulfonierung eines Kunststoffteils bereitgestellt. Das Verfahren umfasst:
   (A) das Trocknen des Kunststoffteils; und
   (B) das Behandeln des getrockneten Kunststoffteils mit einem Gasgemisch, enthaltend SO₂ und SO₃,
wobei die Konzentration von SO₂ in dem Gasgemisch von Schritt (B) mindestens 5 mg/dm³ beträgt und die Konzentration von SO₃ in dem Gasgemisch von Schritt (B) mindestens 10 mg/dm³ beträgt.

Die Schritte werden in der Reihenfolge (A) und dann (B) durchgeführt.

Ein Vorteil des erfindungsgemäßen Verfahrens ist, dass die Funktionalisierung in Schritt (B) mit SO₃ erfolgt und es nicht notwendig ist, Chromsäuremischungen zu verwenden. Stattdessen findet eine Funktionalisierung durch Sulfonierung des Kunststoffteils mit SO₃ statt. Die Vorteile einer Sulfonierung mit SO₃ sind unter anderem, dass im Vergleich zu Chromsäuremischungen ein geringerer arbeitstechnischer Aufwand notwendig ist. Die Sulfonierung kann in einer Reaktionskammer oder einem Reaktionsraum erfolgen, und überschüssiges oder aus dem Reaktionsraum austretendes SO₃ kann abgesaugt und über einen geeigneten Absorber aus dem Verfahren abgeführt werden. Geeignete Absorber sind zum Beispiel Feststoffabsorber aus Aktivkohle oder Carbonate; auch Gaswäscher oder Tropfenabscheider können eingesetzt werden.

Bevor das Kunststoffteil sulfoniert wird, wird es im Schritt (A) getrocknet, also der Wassergehalt der Oberfläche des Kunststoffteils reduziert. Somit kann die Bildung von Schwefelsäure reduziert oder gar ganz vermieden werden, weil eine Reaktion von Wasser mit SO₃ auf dem Kunststoffteil während der Sulfonierung im Schritt (B) vermieden wird.

Die Vermeidung von Schwefelsäure ist vorteilhaft, da die Bildung von Schwefelsäuretröpfchen auf dem Kunststoffteil zu Überätzungen führen kann, die wiederum zu einer ungleichmäßigen Funktionalisierung und damit zu einer ungleichmäßigen Metallisierung führen können. Ferner ist es vorteilhaft, die Bildung von Schwefelsäure zu vermeiden, weil diese dann nicht aufwendig entfernt werden muss.

Wie oben beschrieben, birgt eine wasserfreie Reaktionsführung jedoch die Gefahr einer elektrostatischen Aufladung des Kunststoffteils. Völlig überraschend wurde gefunden, dass durch den Einsatz von SO₂ elektrostatische Aufladungen auf der Kunststoffoberfläche, wie sie sonst unter wasserfreien Bedingungen entstehen, reduziert oder ganz vermieden werden können. Somit ist es möglich, die getrocknete Kunststoffoberfläche gleichmäßiger zu funktionalisieren und zu metallisieren, als dies bei einem elektrostatisch aufgeladenen Kunststoffteil, wie es bei herkömmlichen Sulfonierungsverfahren unter wasserfreien Bedingungen vorliegt, der Fall ist.

Die Erfinder vermuten, dass die Fähigkeit des SO₂, elektrostatische Aufladungen zu reduzieren bzw. abzuleiten, damit zusammenhängt, dass SO₂ einen dipolaren Charakter aufweist, der dem von H₂O ähnelt. Es wird angenommen, dass das dipolare SO₂ analog zur Luftfeuchtigkeit in der Lage ist, elektrostatische Ladungen über die Atmosphäre im Reaktionsraum abzuleiten. Der Vorteil einer Behandlung mit SO₂ im Gegensatz zu feuchter Luft ist, dass aus dem SO₂ keine störenden Nebenprodukte wie Schwefelsäure gebildet werden.

Weiterhin haben die Erfinder gefunden, dass die Entladung durch SO₂ im Vergleich zur Sulfonierung, also der chemischen Funktionalisierung der Kunststoffoberfläche mit SO₃, schnell verläuft. Dadurch können im erfindungsgemäßen Verfahren gleichzeitig SO₂ und SO₃ eingesetzt werden, sodass das Kunststoffteil in einem Schritt rasch entladen und das entladene Kunststoffteil sulfoniert werden kann. Im Übrigen verhält sich das SO₂ inert, das heißt, es geht weder mit dem Kunststoffteil noch mit SO₃ eine unerwünschte Reaktion ein, die einen Einfluss auf die Sulfonierung haben könnte.

Somit wird während des erfindungsgemäßen Verfahrens die Bildung von Schwefelsäure reduziert oder gänzlich vermieden und es wird eine elektrostatische Aufladung des Kunststoffteils verringert, was eine verbesserte, gleichmäßige Sulfonierung des Kunststoffteils ermöglicht. Diese ermöglicht wiederum eine verbesserte, gleichmäßige Metallisierung der Kunststoffteile mit einer optisch ansprechenden Metallschicht.

Wie oben beschrieben, kann die Behandlung mit Schwefeldioxid im selben Schritt wie die Sulfonierung mit Schwefeltrioxid erfolgen, weil die Entladung rasch erfolgt und das SO₂ die Sulfonierung nicht stört. Es ist jedoch auch möglich, zuerst das Kunststoffteil mit SO₂ zu entladen und dann mit SO₃ zu sulfonieren.

(2) Daher wird als weiterer Aspekt der Erfindung ein weiteres Verfahren zur Sulfonierung eines Kunststoffteils bereitgestellt, das die Schritte umfasst:
(a) das Trocknen des Kunststoffteils;
(b1) das Behandeln des getrockneten Kunststoffteils mit einem ersten Gasgemisch, enthaltend SO₂; und dann
(b2) das Behandeln des Kunststoffteils mit einem zweiten Gasgemisch, enthaltend SO₃,
wobei die Konzentration von SO₂ in dem ersten Gasgemisch von Schritt (b1) mindestens 5 mg/dm³ beträgt und die Konzentration von SO₃ in dem zweiten Gasgemisch von Schritt (b2) mindestens 10 mg/dm³ beträgt.

Bei diesem Verfahren entspricht Schritt (a) dem Schritt (A). Im Unterschied zum Schritt (B), in dem das Kunststoffteil gleichzeitig mit SO₂ und SO₃ behandelt wird, erfolgt aber im Schritt (b1) zuerst eine Entladung des Kunststoffteils mit SO₂ und anschließend im Schritt (b2) eine Sulfonierung mit SO₃. Die Schritte werden also in der Reihenfolge (a), (b1) und dann (b2) durchgeführt.

Weil Schwefeldioxid, wie oben beschrieben, weder mit dem Kunststoffteil noch mit SO₃ eine störende Reaktion eingeht, die einen Einfluss auf die Konditionierung hat, ist es nicht notwendig, das SO₂ vor Beginn der Sulfonierung von Schritt (b2) vollständig aus dem Verfahren abzuführen. Das SO₂ kann, muss aber nicht entfernt werden.

Es ist bevorzugt, die Schritte (b1) und (b2) nacheinander in demselben Reaktionsraum durchzuführen. Hierfür kann das erste Gasgemisch mit SO₂ zumindest teilweise durch das zweite Gasgemisch mit SO₃ ersetzt werden. Es kann auch einfach SO₃-Gas in das erste Gasgemisch eingeführt werden, um aus dem ersten Gasgemisch das zweite Gasgemisch zu bilden.

Eine weitere Variante ist, für die Schritte (b1) und (b2) zwei über eine Schleuse miteinander verbundene Reaktionsräume zu verwenden. Das Kunststoffteil kann dann, ohne äußeren Einflüssen ausgesetzt zu werden, von dem Reaktionsraum des Schritts (b1) in den Reaktionsraum des Schritts (b2) überführt werden.

Auch bei der Aufteilung der Entladung mit SO₂ und der Sulfonierung mit SO₃ auf die Schritte (b1) und (b2) werden die oben für das Verfahren mit den Schritten (A) und (B) beschriebenen Vorteile erhalten. Die Funktionalisierung von Schritt (b2) erfolgt mit SO₃, und es ist nicht notwendig, Chromsäuremischungen für die Funktionalisierung zu verwenden. Ebenso wird durch das Trocknen des Kunststoffteils der Wassergehalt reduziert, wodurch die Bildung von Schwefelsäure reduziert oder gar ganz vermieden werden kann, weil eine Reaktion von Wasser mit SO₃ vermieden wird. Durch die Behandlung des Kunststoffteils mit SO₂ im Schritt (b1) werden die elektrostatischen Ladungen verringert bzw. das Kunststoffteil entladen, wodurch im Schritt (b2) eine Sulfonierung eines entladenen Kunststoffteils unter wasserfreien Bedingungen ermöglicht wird.

Im Nachfolgenden wird, sofern nicht explizit anders angeben, auf beide Verfahrensvarianten gemeinschaftlich als "Verfahren" Bezug genommen.

Wie oben angegeben, wird das Kunststoffteil von Schritt (A) bzw. Schritt (a) getrocknet. Durch das Trocknen wird der Wassergehalt auf dem Kunststoffteil reduziert. Für das Trocknen können im Grunde alle dem Fachmann bekannten Verfahren verwendet werden. Zum Trocknen kann das Kunststoffteil beispielsweise in Gegenwart eines Trockenmittels gelagert werden, im Vakuum gelagert werden oder bei erhöhter Temperatur gelagert werden. Diese Maßnahmen können natürlich auch kombiniert werden.

Geeignete Temperaturen für das Trocknen liegen beispielsweise zwischen 20°C und 150°C, bevorzugt zwischen 20°C und 100°C und mehr bevorzugt zwischen 40 und 90°C. Die Obergrenze der Temperatur richtet sich natürlich nach der thermischen Belastbarkeit des Kunststoffmaterials. Üblicherweise liegt die Obergrenze mindestens 10°C unter der thermischen Zersetzungstemperatur bzw. des Erweichungspunkts des Kunststoffs.

Die Dauer des Trocknens ist abhängig von der angewendeten Art der Trocknung und beträgt beispielsweise 10 min bis 24 h, vorzugsweise 1 h bis 15 h. Beispielsweise können die Kunststoffteile bei einer Temperatur von 80°C für mindestens 1 h getrocknet werden.

(3) Wie oben ausgeführt, ist es vorteilhaft, die Bildung von Schwefelsäure in dem Reaktionsraum der Sulfonierung zu vermeiden. Es ist daher bevorzugt, möglichst wenig Wasser über das Gasgemisch von Schritt (B) bzw. die Gasgemische der Schritte (b1) und (b2) einzuführen.

In der Regel beträgt die Wasserkonzentration in dem Gasgemisch von Schritt (B) bzw. in den Gasgemischen von Schritt (b1) und Schritt (b2) höchstens 4 g/m³, bevorzugt höchstens 1 g/m³ und mehr bevorzugt höchstens 0,1 g/m³ (Angabe in g Wasser pro m³ Gasgemisch). Das jeweilige Gasgemisch der Schritte (B), (b1) und (b2) weist insbesondere eine Wasserkonzentration von höchstens 0,05 g/m³ auf.

Der niedrige Wassergehalt kann auf herkömmliche Weise erhalten werden, indem beispielsweise trockene Gase oder Gasgemische als Ausgangsmaterial eingesetzt werden oder die Gase oder Gasgemische vor der Verwendung getrocknet werden. Für das Trocknen von Gasen bzw. Gasgemischen können dem Fachmann bekannte Verfahren benutzt werden. Beispielsweise kann das Gasgemisch zur Trocknung über ein Wasseradsorptionsmittel, z.B. ein Molekularsieb, geleitet werden.

Es ist beispielsweise auch möglich, trockene, synthetische Luft mit SO₂ bzw. SO₃ zu versetzten. Synthetische Luft ist kommerziell mit niedrigem Wassergehalt, z.B. weniger als 0,05 g/m³, erhältlich. Ebenso sind die meisten technischen Gase mit niedrigem Wassergehalt kommerziell erhältlich.
(4) In dem erfindungsgemäßen Verfahren wird durch den Einsatz von SO₂ eine Verringerung der elektrostatischen Ladung auf dem Kunststoffteil schon bei geringen Mengen an SO₂ beobachtet. Um eine verlässliche Verringerung der elektrostatischen Ladung zu erzielen, beträgt die minimale Konzentration von SO₂ im Gasgemisch von Schritt (B) bzw. Schritt (b1) 5 mg/dm³. In der Regel beträgt die maximale Konzentration von SO₂ im Gasgemisch von Schritt (B) bzw. Schritt (b1) 250 mg/dm³, da bei höheren Konzentrationen keine wesentliche Verbesserung der Entladung bzw. Verringerung der statischen Oberflächenspannung des Kunststoffteils erfolgt. Die Konzentration von SO₂ in dem Gasgemisch von Schritt (B) bzw. von Schritt (b1) liegt daher in der Regel im Bereich von 5 mg/dm³ bis 250 mg/dm³. Bevorzugt liegt die Konzentration von SO₂ im Bereich von 15 mg/dm³ bis 150 mg/dm³, mehr bevorzugt im Bereich von 20 mg/dm³ bis 150 mg/dm³ und am bevorzugtesten im Bereich von 30 mg/dm³ bis 150 mg/dm³.
(5) Um eine ausreichende und gleichmäßige Sulfonierung und damit eine gleichmäßige Metallisierung des Kunststoffteils zu gewährleisten, enthält das Gasgemisch von Schritt (B) bzw. von Schritt (b2) eine Konzentration an SO₃ von mindestens 10 mg/dm³. Grundsätzlich ist die maximale SO₃-Konzentration in dem jeweiligen Gasgemisch nicht begrenzt. Allerdings sollte bei sehr hohen SO₃-Konzentrationen die Behandlungsdauer sorgfältig kontrolliert und auf eine besonders gleichmäßige Exposition der Oberfläche geachtet werden, um eine lokale Übersulfonierung des Kunststoffteils zu vermeiden. Es ist daher vorteilhaft, die SO₃-Konzentration nicht zu hoch zu wählen, weil dann die Verfahrensführung vereinfacht wird. In der Regel entspricht die maximale SO₃-Konzentration in dem Gasgemisch von Schritt (B) bzw. (b2) daher einer SO₃-Konzentration, die dem Dampfdruck von SO₃ über 65%-igem Oleum bei Raumtemperatur entspricht (Raumtemperatur = 25°C). Bevorzugt liegt die Konzentration von SO₃ im Gasgemisch von Schritt (B) bzw. von Schritt (b2) im Bereich von 10 mg/dm³ bis 400 mg/dm³, mehr bevorzugt im Bereich von 30 mg/dm³ bis 300 mg/dm³ und am bevorzugtesten im Bereich von 50 mg/dm³ bis 200 mg/dm³.
   Durch eine solche SO₃-Konzentration kann eine ausreichende und gleichmäßige Sulfonierung der Kunststoffteile erhalten werden, um die Kunststoffteile auf eine nachfolgende Metallisierung optimal vorzubereiten.
(6) Wie oben bereits ausgeführt, ermöglicht die Behandlung mit SO₂ in Schritt (B) bzw. in Schritt (b1) eine Verringerung der elektrostatischen Aufladung des getrockneten Kunststoffteils. Dies resultiert in einer verbesserten, gleichmäßigen Sulfonierung des Kunststoffteils und somit einer verbesserten, gleichmäßigen Metallisierung des Kunststoffteils. Die Entladung durch SO₂ erfolgt, wie oben ausgeführt, relativ schnell. Daher kann die Behandlungsdauer mit SO₂ im Schritt (b1) beispielsweise 1 bis 30 Sekunden, bevorzugt 5 bis 25 Sekunden, betragen. Längere Behandlungszeiten führen im Allgemeinen zu keiner verbesserten Entladung, sind jedoch auch nicht nachteilig. Für eine ökonomische Verfahrensführung wird daher bevorzugt in diesem Bereich gearbeitet.

Weiterhin ist die Dauer der Behandlung des Kunststoffteils mit Gasgemisch von Schritt (B) bzw. von Schritt (b2) nicht besonders eingeschränkt. Dem Fachmann sind geeignete Behandlungszeiten für die Sulfonierung von Kunststoffen mit Schwefeltrioxid geläufig. Die Behandlungszeit, die Temperatur und die SO₃-Konzentration im Gasgemisch richten sich auch nach der Art des zu behandelnden Kunststoffs. Dabei können kurze Behandlungszeiten durch eine höhere SO₃-Konzentration bzw. eine höhere Temperatur des Gasgemischs ausgeglichen werden. Ebenso können längere Behandlungszeiten bei geringerer SO₃-Konzentration oder geringerer Temperatur zu einer ausreichenden Sulfonierung führen.

Geeignete Behandlungszeiten liegen in der Regel im Bereich von 10 Sekunden bis 400 Sekunden, bevorzugt in einem Bereich von 20 Sekunden bis 300 Sekunden.

Weil die Entladung mit SO₂ und die Sulfonierung, wie oben beschrieben, in relativen kurzen Zeiträumen erfolgen können, ist das erfindungsgemäße Verfahren auch sehr gut für die Massenanfertigung von sulfonierten Kunststoffteilen mit hoher Durchsatzrate geeignet.

(7) Wie oben bereits beschrieben, hat auch die Temperatur des Gasgemischs einen Einfluss auf die Sulfonierung. Die Temperatur sollte so gewählt werden, dass je nach Art des Kunststoffs, eine ausreichende Sulfonierung erfolgt. Bei sehr niedrigen Temperaturen besteht die Gefahr, dass das SO₃ auskristallisiert, was wiederum zu einer unzureichenden Sulfonierung führen kann. Nach oben hin sind der Reaktionstemperatur durch die Temperaturfestigkeit des Kunststoffmaterials Grenzen gesetzt. Weiterhin kann eine zu hohe Temperatur darin resultieren, dass die Sulfonierung der Kunststoffoberfläche sehr schnell erfolgt, und exponierte Bereiche dann zu stark sulfoniert werden, was zu einer ungleichmäßigen Metallisierung führen kann.

In aller Regel liegt die Temperatur des Gasgemischs von Schritt (B) bzw. von Schritt (b1) und Schritt (b2) daher im Bereich von 20°C bis 100°C. Bevorzugt liegt die Temperatur des Gasgemischs von Schritt (B) bzw. Schritt (b1) und Schritt (b2) jeweils im Bereich von 30°C bis 80°C und am bevorzugtesten in einem Bereich von 40°C bis 60°C.

Ebenso liegt die Temperatur der Kunststoffteile von Schritt (B) bzw. von Schritt (b1) und Schritt (b2) beispielsweise in einem Bereich von 20°C bis 100°C, bevorzugt in einem Bereich von 30°C bis 80°C und am bevorzugtesten in einem Bereich von 40°C bis 60°C.

(8) Das SO₃ im Gasgemisch von Schritt (B) bzw. Schritt (b2) kann auf verschiedene Weise bereitgestellt werden. Es kann beispielweise ein Gas bzw. Gasgemisch, ausgewählt aus Luft, synthetischer Luft, Stickstoff, Kohlendioxid und Edelgasen über entsprechend temperiertes Schwefeltrioxid geleitet werden. Aufgrund des Dampfdrucks des SO₃ wird das durchströmende Gas bzw. Gasgemisch dann mit einer dem Dampfdruck entsprechenden Menge an SO₃ beladen. Die Temperatur-Dampfdruckkurve von Schwefeltrioxid ist bekannt, sodass die SO₃-Konzentration ohne weiteres eingestellt werden kann.

Es ist ebenfalls möglich, Schwefeltrioxid aus mit SO₃ angereicherter Schwefelsäure, die mit 65%-igem SO₃-Gehalt als Oleum erhältlich ist, freizusetzen. Das Oleum kann bei Raumtemperatur eingesetzt oder auch zur Erhöhung der SO₃-Freisetzung erhitzt werden. Das SO₃ kann mit einem oder mehreren der oben beschriebenen Gase transportiert werden.

Bevorzugt wird das SO₃ im Gasgemisch von Schritt (B) bzw. Schritt (b2) durch ein Verfahren bereitgestellt, bei dem Schwefeldioxid und Sauerstoff mit Hilfe eines Platin- oder Vanadiumpentoxid-Katalysators zu Schwefeltrioxid umgesetzt werden. Ein solches Verfahren ist aus der Schwefelsäureherstellung unter der Bezeichnung Kontaktverfahren bzw. Doppelkontaktverfahren bekannt.

Die Bereitstellung von SO₃ durch ein solches Verfahren hat den Vorteil, dass kein Oleum oder reines Schwefeltrioxid transportiert und gehandhabt werden muss. Stattdessen kann das SO₃ nach Bedarf aus Schwefeldioxid erzeugt werden. Typischerweise hat dieses SO₃ einen sehr geringen Wassergehalt, weil es aus trockener synthetischer Luft und SO₂ erhalten wird. Diese Form der SO₃-Erzeugung hat den Vorteil, dass nur Gase gehandhabt werden müssen, was den Aufwand reduziert. Die Ausgangsprodukte SO₂ und synthetische Luft können problemlos in Gasflaschen gelagert und transportiert werden. Ein weiterer Vorteil im Vergleich zur SO₃-Bereitstellung aus Oleum ist, dass keine Schwefelsäuretröpfchen auf das Kunststoffteil gelangen können, was bei dem Erwärmen von Oleum passieren kann.

Bei der Oxidation von SO₂ zu SO₃ durch das oben beschriebene Verfahren werden üblicherweise Umsatzraten von 99,5 bis 99,8% erzielt.

Für das Gasgemisch von Schritt (B) bzw. von Schritt (b1) kann das SO₂ beispielsweise bereitgestellt werden, indem reines SO₂, z.B. aus einer herkömmlichen Gasflasche, zugeführt wird, um das Gasgemisch zu erzeugen.

Eine andere vorteilhafte Möglichkeit für die Bereitstellung von SO₂ und SO₃ für das Gasgemisch des Schritts (B) ist, Schwefeldioxid nur anteilig mit Sauerstoff in Gegenwart eines Platin- oder Vanadiumpentoxid-Katalysators zu SO₃ umzusetzen. Anstelle der üblichen hohen Umsatzraten von 99,5 bis 99,8% wird die Reaktion gezielt mit einem niedrigeren Umsatz durchgeführt und so der Gehalt von SO₂ und SO₃ in dem Gasgemisch eingestellt. Beispielsweise kann die Umsatzrate zu SO₃ bzw. die Menge an SO₂ und SO₃ mit Hilfe eines SO₃-Analysators der Firma Pentol bestimmt bzw. eingestellt werden. Somit kann auf das separate Zuführen von SO₂ verzichtet werden.

Allgemein ist es bevorzugt, dass das Gasgemisch von Schritt (B) neben SO₂ und SO₃ bzw. von Schritt (b1) neben SO₂ und von Schritt (b2) neben SO₃ zur Verdünnung ein oder mehrere Gase enthält, die keine unerwünschte Reaktion mit SO₂, SO₃ und dem Kunststoffteil eingehen. Beispielsweise kann das Gasgemisch ein oder mehrere Gase enthalten, ausgewählt aus der Gruppe, bestehend aus Stickstoff, Sauerstoff, Edelgasen und Kohlendioxid. Weiter bevorzugt werden getrocknete Luft oder getrocknete synthetische Luft eingesetzt.

(9) Wie oben beschrieben, werden durch das erfindungsgemäße Verfahren elektrostatische Ladungen auf dem Kunststoffteil entfernt. Bei hohen statischen Oberflächenspannungen bietet es sich an, die SO₂-Konzentration im Gasgemisch von Schritt (B) bzw. im Gasgemisch von Schritt (b1) hoch zu wählen und/oder nach dem Trocknen im Schritt (A) bzw. (a) und vor dem Schritt (B) bzw. (b1) eine Entionisierung mit einem Ionisierungsgebläse durchzuführen. Insbesondere bei einer statischen Oberflächenspannung des getrockneten Kunststoffteils nach dem Schritt (A) bzw. (a) von 1,0 kV oder mehr, bevorzugt 1,5 kV oder mehr und besonders bevorzugt 2,0 kV oder mehr, wird eine SO₂-Konzentration von mindestens 15 mg/dm³, bevorzugt mindestens 20 mg/dm³, besonders bevorzugt mindestens 30 mg/dm³, eingesetzt und/oder es wird eine Entionisierung mit einem Ionisierungsgebläse nach dem Schritt (A) bzw. (a) und vor dem Schritt (B) bzw. (b1) durchgeführt. Die statische Oberflächenspannung kann mit einem Ladungsmessgerät, beispielsweise dem Ladungsmessgerät SK-H050 der Firma Keyence, bei Raumtemperatur bestimmt werden.

Gemäß einer Ausführungsform wird nach dem Schritt (A) bzw. (a) und vor dem Schritt (B) bzw. (b1) ein Entionisieren mit einem Ionisierungsgebläse bei einer Oberflächenspannung auf dem getrockneten Kunstteil von 1,0 kV oder mehr, bevorzugt 1,5 kV oder mehr, besonders bevorzugt 2,0 kV oder mehr, durchgeführt. Das Kunststoffteil wird also zunächst im Schritt (A) bzw. (a) getrocknet, dann die statische Oberflächenspannung bestimmt und ggf. anschließend die elektrostatischen Ladungen mittels des Ionisierungsgebläses vor dem Schritt (B) bzw. (b1) reduziert.

Dem Fachmann sind geeignete Ionisierungsgebläse und deren Handhabung grundsätzlich bekannt. Beispielsweise kann zur Entionisierung ein Ionisierungsgebläse SJ-F2500 der Firma Keyence verwendet und gemäß der zugehörigen Gebrauchsanweisung des Herstellers gehandhabt werden. Durch die Entionisierung mit einem Ionisierungsgebläse werden elektrostatische Ladungen auf dem getrockneten Kunststoffteil reduziert. Weiterhin werden etwaige Staubpartikel auf den Kunststoffteilen reduziert. Zum Entfernen von Staubpartikeln können natürlich auch andere herkömmliche Maßnahmen getroffen werden.

Die Entionisierung mit einem Ionisierungsgebläse nach dem Schritt (A) bzw. (a) kann jedoch nicht die erfindungsgemäße Behandlung mit SO₂ im Schritt (B) bzw. im Schritt (b1) ersetzen, denn in aller Regel ist es notwendig, die Entionisierung mit dem Ionisierungsgebläse außerhalb des Reaktionsraums bzw. Reaktors für die Sulfonierung durchzuführen. Das liegt zum einen daran, dass SO₂ bzw. SO₃ das Gebläse korrodieren und beschädigen würden. Somit sollte vermieden werden, dass das Ionisierungsgebläse mit SO₃ in Kontakt kommt. Zudem erfordert das Ionisierungsgebläse auch einen starken Gasaustausch, sodass es sich nicht für einen (weitgehend) geschlossenen Reaktionsraum oder Reaktor, wie er üblicherweise für die Sulfonierung eingesetzt wird, eignet.

Die getrockneten Kunststoffteile werden somit im Allgemeinen nach der Entionisierung durch das Ionisierungsgebläse zu dem Reaktionsraum oder Reaktor für die Sulfonierung transportiert. Der Transport der Kunststoffteile erfolgt üblicherweise auf Gestellen oder Gittern, wobei eine erneute elektrostatische Aufladung erfolgen kann. Diese erneute Aufladung ist üblicherweise im Vergleich zur vorherigen Aufladung gering, kann aber dennoch die Sulfonierung und damit das Metallisierungsergebnis negativ beeinflussen.

Durch das erfindungsgemäße Verfahren werden auch diese erneut gebildeten elektrostatischen Ladungen reduziert, weil im Schritt (B) die Behandlung mit SO₂ im selben Reaktionsraum wie die Sulfonierung erfolgt. Die Schritte (b1) und (b2) werden bevorzugt in demselben Reaktionsraum durchgeführt oder es werden alternativ vorzugsweise zwei über eine Schleuse miteinander verbundene Reaktionsräume eingesetzt. Die Anforderungen für das Arbeiten mit SO₂ und SO₃ sind sehr ähnlich, sodass es unökonomisch wäre, die Reaktionsräume baulich stärker voneinander zu trennen.

(10) Das Kunststoffteil umfasst mindestens einen Kunststoff oder es besteht ganz daraus. Die Art des Kunststoffs ist bei dem erfindungsgemäßen Verfahren nicht sonderlich eingeschränkt. Beispielsweise wird ein Kunststoffteil für das Verfahren verwendet, das mindestens einen Kunststoff umfasst, der aus der Gruppe, bestehend aus Poly-Acrylester-Styrol-Acrylnitril, Poly-Acrylnitril-Butadien-Styrol (ABS), Polyamid, Polyarylamid (PARA), Polyphtalamid, Polyimid, Polyetherimid, Polyetheretherketon, Polysulfon, Polyethersulfon, Polyphenylensulfid, Polyphenylenoxide, Polyvinylchlorid, Polyethylen, Polypropylen, Polystyrol, syndiotaktisches Polystyrol, Polyester, Polyurethan, Epoxidharze und Epoxidlacke, ausgewählt ist. Bevorzugt wird ein Kunststoffteil sulfoniert, das einen Kunststoff umfasst, der aus der Gruppe, bestehend aus Polyarylamid, Poly-Acrylnitril-Butadien-Styrol, Polyamid, Polyetheretherketon, Polyphenylensulfid und Polyphtalamid, ausgewählt ist. Diese Kunststoffe sind für die Sulfonierung und anschließende Metallisierung besonders gut geeignet, weil sie vergleichsweise leicht, also schnell, sulfoniert werden können und in der Regel auch gute Beschichtungsergebnisse ermöglichen.

Die oben genannten Kunststoffe können weiterhin mit Füllstoffen, wie z.B. Glasfasern oder Kohlenstoffpartikeln versetzt sein. Weiterhin können die Kunststoffe übliche Additive, wie Prozesshilfen, Flammhemmer, Weichmacher und/oder Stabilisatoren enthalten. Geeignete Füllstoffe und Additive sind dem Fachmann an sich bekannt.

Einige Kunststoffe erfordern vergleichsweise lange Sulfonierungszeiten, um eine ausreichende Haftung der Metallschicht zu ermöglichen. Zu diesen Kunststoffen zählen zum Beispiel Liquid Crystal Polymers, Polycarbonat und Polymethylmethacrylat.

In dem erfindungsgemäßen Verfahren kann das Kunststoffteil aus einem oder mehreren Polymeren bzw. Polymerzusammensetzungen bestehen. Zum Beispiel können dem erfindungsgemäßen Verfahren sogenannte Kompositbauteile, wie z.B. ein Kunststoffteil, bestehend aus Polyarylamid und Poly-Acrylnitril-Butadien-Styrol, zugeführt werden.

Durch die Wahl der Kunststoffe ist es möglich, Mehrkomponentenkunststoffteile selektiv zu funktionalisieren und anschließend selektiv zu metallisieren. Beispielsweise können bei einem Kunststoffteil, welches Oberflächen aus Polycarbonat und Oberflächen aus Poly-Acrylnitril-Butadien-Styrol enthält, selektiv die Oberflächen aus Poly-Acrylnitril-Butadien-Styrol sulfoniert und anschließend metallisiert werden, weil diese kürzere Sulfonierungszeiten erfordern.

Weiterhin können in dem erfindungsgemäßen Verfahren ein oder mehrere Kunststoffteile gleichzeitig sulfoniert werden. Die Anzahl der Kunststoffteile kann sich an der Größe des Reaktionsraums bzw. der Reaktionskammer orientieren und wie viele Kunststoffteile auf einem Gestell angeordnet werden können bzw. wie viele Gestelle in den Reaktionsraum passen. Die Kunststoffteile können auch als Schüttung in das Verfahren eingebracht werden. Dabei wird das Schüttgut in der Regel während des Verfahrens so bewegt, dass das Schüttgut in einer Vorrichtung möglichst gleichmäßig mit dem Gasgemisch in Berührung kommt. Alternativ oder zusätzlich kann auch das Gas zirkuliert werden.

Das erfindungsgemäße Verfahren kann mit herkömmlichen Kunststoffteilen durchgeführt werden. Beispielsweise können als Kunststoffteil Scherköpfe, Lüftungslamellen, Kunststoffteile für dekorative Zwecke wie Logos oder Zierleisten, Kunststoffteile für den Sanitärbereich, Substrate für Leiterplatten und Gehäuse oder Gehäuseteile von Elektrogeräten verwendet werden.

(11) Gemäß einer weiteren Ausführungsform des erfindungsgemäßen Verfahrens wird das Kunststoffteil nach der Sulfonierung von Schritt (B) bzw. von Schritt (b2) mit Wasser und/oder einer wässrigen Salzlösung gespült, sodass die sulfonierte Kunststoffoberfläche Sulfonsäuregruppen und/oder Salze davon als funktionelle Gruppen aufweist.

Das Spülen der sulfonierten Kunststoffteile ermöglicht es, dass die funktionalisierten Kunststoffteile vor der chemischen Metallisierung über längere Zeit gelagert oder transportiert werden können, ohne dass die Vorteile der hohen Benetzungsfähigkeit und chemischen Metallisierbarkeit verloren gehen.

Die Salze der Sulfonsäuregruppen können als Gegenkation zum Sulfonsäureanion diverse Kationen enthalten. Besonders geeignet sind Metallkationen folgender Metalle: Li, Na, K, Rb, Be, Mg, Ca, Sr, Ba, Al, Ga, In, Sc, Ti, V, Cr, Fe, Zn, Mo, W, Ta, Pd, Ag, Au oder Pt. Zudem sind auch nichtmetallische Gegenkationen, beispielsweise quartäre Ammoniumverbindungen, Ammonium, Aminosäurekationen, Imidazoliumkationen, Morpholinkationen, Phosphoniumkationen und Pyridiniumkationen möglich.

Besonders bevorzugt weist die sulfonierte Kunststoffoberfläche nach dem Spülen Gruppen, ausgewählt aus Sulfonsäuregruppen, Natriumsalzen davon und Kaliumsalzen davon, auf.

Wie oben beschrieben, ermöglicht das Spülen der sulfonierten Kunststoffteile, dass diese vor der chemischen Metallisierung gelagert oder transportiert werden können. Anstelle eines Spülschritts kann das sulfonierte Kunststoffteil aber auch direkt nach der Sulfonierung einer Metallisierung unterzogen werden.

Die Überführung des sulfonierten Kunststoffteils zur Metallisierung kann dabei beispielsweise auf einem Gestell oder einer Vorrichtung erfolgen, wie sie auch für die Sulfonierung verwendet werden können. Beispielsweise kann eine solche Vorrichtung zum Bewegen mehrerer Teile gleichzeitig dienen.

Das oben beschriebene erfindungsgemäße Verfahren zur Sulfonierung kann in den Prozessablauf einer herkömmlichen metallischen Beschichtung von Kunststoffen eingefügt werden, indem der gesamte Teil der Kunststoffvorbehandlung durch das oben dargestellte erfindungsgemäße Verfahren ersetzt oder ergänzt wird. Das erfindungsgemäße Verfahren kann in einer Vorrichtung sehr kompakt angeordnet werden, sodass eine Integration direkt in eine Galvanoanlage und damit in den galvanischen Gesamtprozess möglich ist. Je nach Ausführungsform des erfindungsgemäßen Verfahrens kann der Reaktionsraum bzw. der Sulfonierungsraum beispielsweise mit zwei Schleusen, eine zum Beschicken und eine zum Entladen des Kunststoffteils oder der Kunststoffteile, ausgerüstet sein. Auf diese Weise kann ein Durchlaufverfahren erreicht werden.

Der Reaktionsraum ist bevorzugt über eine Schleuse zugänglich. Beim Reaktionsraum kann es sich sowohl um ein offenes oder geschlossenes System handeln. Offenes System bedeutet in diesem Fall, dass der Reaktionsraum nicht vollständig dicht abgeschlossen ist. Das SO₂ und SO₃ im Gasgemisch von Schritt (B) bzw. das SO₂ im Gasgemisch von Schritt (b1) und das SO₃ im Gasgemisch von Schritt (b2) hat bei gleichem Druck eine höhere Dichte als Luft und verbleibt beim Öffnen und Schließen des Reaktionsraums weitestgehend darin. Ein geringer Anteil von austretendem Gasgemisch kann über die Schleuse abgeführt werden. Ein Vorteil einer offenen Anordnung ist, dass ein Überdruck des Reaktionsgases innerhalb der Reaktionskammer verhindert wird. Wenn es sich beim Reaktionsraum um ein geschlossenes System bzw. einen vollständig abgeschlossenen Reaktionsraum handelt, wird im Reaktionsraum vorzugsweise ein leichter Unterdruck eingestellt. Da grundsätzlich nur die SO₂- und SO₃-Mengen wichtig sind, kann das erfindungsmäße Verfahren aber auch bei starkem Unterdruck, zum Beispiel 30 bis 100 mbar, durchgeführt werden. Das erfindungsgemäße Verfahren wird insbesondere bei einem Druck von 30 bis 1100 mbar, bevorzugt 900 bis 1100 mbar, durchgeführt.

(12) Als weiterer Aspekt der Erfindung wird ein Verfahren zur Herstellung eines metallisierten Kunststoffteils bereitgestellt. Das Verfahren umfasst
(I) das Sulfonieren eines Kunststoffteils gemäß einer Ausführungsform des oben beschrieben Verfahren zur Sulfonierung eines Kunststoffteils; und
(II) das Metallisieren des sulfonierten Kunststoffteils.

Das Verfahren zur Herstellung des metallisierten Kunststoffteils baut also auf dem oben beschriebenen Verfahren auf und erzielt dementsprechend auch die oben genannten Vorteile. Das erfindungsgemäße Sulfonierungs-Verfahren ermöglicht insbesondere eine gleichmäßig sulfonierte Kunststoffoberfläche, auf der dann eine gleichmäßig geformte, optisch ansprechende Metallschicht mit guter Haftung ausgebildet werden kann. Das Metallisieren von sulfonierten Kunststoffen ist dem Fachmann an sich bekannt und kann nach herkömmlichen, dem Fachmann bekannten Verfahren erfolgen.

(13) Der Schritt (II) zur Metallisierung des sulfonierten Kunststoffteils umfasst dabei insbesondere die folgenden Schritte (II-1) bis (11-3):
(II-1) das Bekeimen der Oberfläche des sulfonierten Kunststoffteils mit einem Metall;
(II-2) das chemische Abscheiden einer ersten Metallschicht; und
(II-3) optional das galvanische oder chemische Abscheiden von mindestens einer zweiten Metallschicht. Dabei werden die Schritte in der Reihenfolge Schritt (II-1), Schritt (II-2) und Schritt (II-3) ausgeführt.

Bevorzugt folgt nach dem chemischen Abscheiden der ersten Metallschicht das galvanische Abscheiden von mindestens einer zweiten Metallschicht.

(14) In Schritt (II-1) erfolgt eine Bekeimung des sulfonierten Kunststoffteils. Bei der Bekeimung werden Metallkeime, also Keime aus Metall, auf der sulfonierten Kunststoffoberfläche gebildet. Das Metall ist bevorzugt aus der Gruppe ausgewählt, die aus Pd, Ag, Au, Pt, Cu, Co, Ni und Pd/Sn besteht.

Typischerweise wird zum Bekeimen entweder eine Lösung eines Metallkolloids eingesetzt oder die Kunststoffoberfläche wird zunächst mit einer Edelmetallionen-Lösung behandelt und anschließend die adsorbierten Edelmetallionen mit einem Reduktionsmittel zu Metallkeimen reduziert.

Als Metallkolloide können beispielsweise Kolloide von einem oder mehreren Metallen, ausgewählt aus der Gruppe, bestehend aus Pd, Ag, Au, Pt, Cu, Co, Ni und Pd/Sn, eingesetzt werden. Bevorzugt wird ein Pd-Kolloid oder ein Pd/Sn-Kolloid, insbesondere ein Pd/Sn-Kolloid, eingesetzt. Die Verwendung von solchen Metallkolloiden ist beispielsweise in DE 196 11 137 und US 4,520,046 beschrieben. Ein Pd/Sn-Kolloid ist beispielsweise unter der Bezeichnung Cataposit PM-958 (Fa. Dow) kommerziell erhältlich.

Eine Edelmetallionen-Lösung ist eine Lösung eines Edelmetallsalzes, welche Edelmetallionen enthält. Die Edelmetallionen sind dabei insbesondere aus Ionen von Pd, Pt, Au und Ag ausgewählt. Bevorzugt wird eine Lösung von Palladiumionen verwendet, die beispielsweise aus Palladiumchlorid, Palladiumnitrat oder Palladiumacetat hergestellt wird. Die vorstehend genannten Edelmetallionen haben den Vorteil, dass sie leicht zum entsprechenden Metall reduziert werden können. Geeignete Reduktionsmittel sind beispielsweise Natriumhypophosphit, Formaldehyd und Borane wie Dimethylaminoboran.

Geeignete Edelmetallionen-Lösungen und Reduktionsmittel sind beispielsweise in DE 21 26 781 C1 beschrieben. Geeignete Edelmetallionen-Lösungen und Reduktionsmittel sind auch kommerziell erhältlich und können gemäß den Gebrauchsanweisungen der Hersteller eingesetzt werden. Beispielsweise sind geeignete Palladiumionenlösung unter der Bezeichnung Aktivator SLOTOSIT KM 3200 (16320) oder Aktivator SLOTOSIT PDI 10 (18007) bei der Firma Schlötter erhältlich. Eine kommerziell erhältliche Reduktionslösung ist beispielsweise Reduktion SLOTO-SIT R 10 (16003) oder Reduktor SLOTOSIT KM 3300 (16330) der Firma Schlötter.

Nach der Bekeimung und ggf. auch zwischen der Behandlung des sulfonierten Kunststoffteils mit einer Edelmetallionenlösung und der anschließenden Reduktion wird in der Regel mit Wasser gespült.

Im Schritt (II-2) wird eine Metallschicht auf der bekeimten Kunststoffoberfläche chemisch abgeschieden. Diese chemische Metallisierung erfolgt beispielsweise durch das Einführen des Kunststoffteils in ein Metallbad zur chemischen Abscheidung von, z.B. Kupfer oder Nickel. Geeignete Zusammensetzungen für solche Nickel- bzw. Kupferbäder sind beispielsweise in DE 21 26 781 C1 beschrieben. Ebenso sind geeignete Lösungen für die chemische Metallisierung erhältlich und können gemäß der Gebrauchsanweisung der Hersteller eingesetzt werden. Als chemische Nickelbäder können beispielsweise SLOTOSIT KM 3400 (16340), SLOTOSIT KM 3410 (16341), SLOTONIP 60 (18020) oder SLOTONIP 80 (18080) der Firma Schlötter verwendet werden. Über die chemische Abscheidung können sowohl dünne leitfähige Schichten, beispielsweise mit Schichtdicken von 0,5 bis 4 µm, als auch dickere funktionale Metallschichten, beispielsweise mit Schichtdicken von 8 bis 30 µm, abgeschieden werden.

Nach der oben beschriebenen chemischen Metallisierung wird im Schritt (II-3) in der Regel mindestens eine zweite Metallschicht, beispielsweise aus Nickel, Zink, Gold, Silber oder Kupfer, chemisch oder galvanisch, bevorzugt galvanisch, abgeschieden. Geeignete Maßnahmen zur chemischen bzw. galvanischen Abscheidung sind dem Fachmann an sich bekannt. Es können beispielsweise die kommerziell erhältliche Ni-Elektrolytlösung NORMA oder Nickelsulfamat MS der Firma Schlötter und die Cu-Elektrolytlösung SLOTOCOUP CU 1450 der Firma Schlötter eingesetzt werden.

Die Metallbäder für die chemische und galvanische Metallabscheidung können auch übliche Additive wie Glanzbildner, Grundglänzer und Nivellierungsmittel enthalten.

Wie oben ausgeführt, wird durch das erfindungsgemäße Verfahren zur Sulfonierung ein Kunststoffteil mit einer gleichmäßig funktionalisierten Oberfläche erhalten. Das ermöglicht es, dass bei dem erfindungsgemäßen Verfahren zur Herstellung eines metallisierten Kunststoffteils ein gleichmäßig metallisiertes Kunststoffteil erhalten wird, wobei eine gute Haftung zwischen Kunststoffoberfläche und einer optisch ansprechenden Metallschicht besteht.

### Beispiele

### Allgemeine Vorgehensweisen

### Kunststoffteile

Für die Versuche wurden als Kunststoffteile Kunststoffplatten aus Poly-Acrylnitril-Butadien-Styrol (ABS), nämlich Novodur® P2MC, und Kunststoffplatten aus Polyarylamid (PARA), erhältlich unter dem Handelsnamen IXEF®, verwendet. Die Kunststoffteile hatten jeweils die Maße 5 cm x 10 cm x 0,3 cm.

Zur Vorbereitung wurden die Kunststoffteile auf einem Edelstahlgestell einzeln fixiert, gereinigt und gespült. Zur Reinigung wurden die Kunststoffteile in den sauren Reiniger SLOTOSIT KM 3100, erhältlich bei der Fa. Schlötter, für 2 min bei 25°C eingetaucht. Im Anschluss wurde 2 Mal durch Eintauchen in einen Wasserbehälter für je 30 s und zwischenzeitlichem Abtropfen für 5 s nachgewaschen und dann die so gespülten Kunststoffteile bei 80°C für 16 h getrocknet.

Für die Versuche wurde ein Edelstahlgestell, das aus einem ca. 3 mm dicken Edelstahldraht gebildet ist, verwendet. Der Draht ist so gewunden, dass eine 1 cm² Klemmhalterung gebildet wird. In einem Abstand von 10 cm zur Klemmhalterung ist der Draht zur Schlaufe gebogen, welche als Halterung dient.

### Gase für die Sulfonierungsversuche

Synthetische Luft: Synthetische Luft KW-frei, 20% Sauerstoff, Rest Stickstoff von Linde (Wassergehalt ≤ 2 ppm)
SO₂: Druckgasflasche, Schwefeldioxid N38 von Air Liquide

### Messung der statischen Oberflächenspannung

Die statische Oberflächenspannung wurde mit einem Ladungsmessgerät, dem Gerät SK-H050 der Firma Keyence, bei Raumtemperatur bestimmt.

### Materialien für die Metallisierung

Für die Metallisierung der sulfonierten Kunststoffteile wurden bei den Versuchen die folgenden Materialien verwendet.

Reinigung: SLOTOSIT KM 3100 der Fa. Schlötter (wässriger saurer Reiniger)
Aktivator: SLOTOSIT KM 3200 der Fa. Schlötter (saure Lösung von Pd-Ionen)
Reduktor: SLOTOSIT KM 3300 der Fa. Schlötter (Lösung von chemischen Reduktionsmitteln)
Chemisches Nickelbad zur chemischen Abscheidung von Nickel: SLOTOSIT KM 3400 der Fa. Schlötter
Galvanisches Nickelbad zur galvanischen Abscheidung von Nickel: Nickelbad NORMA der Fa. Schlötter
Galvanisches Kupferbad zur galvanischen Abscheidung von Kupfer: Kupferbad SLOTOCOUP CU 1450 der Firma Schlötter.

### Metallisierung der sulfonierten Kunststoffteile

Zur Beurteilung der Sulfonierung wurden die Kunststoffteile nach der Sulfonierung gemäß der in Tabelle 1 zusammengefassten Vorgehensweise metallisiert.

**Tabelle 1: Verfahrensschritte zur Metallisierung**

| | **Verfahrensschritt** | **Bedingungen** | **Zeit bzw. Schichtdicke** |
|---|---|---|---|
| **1** | Sulfonierung des Kunststoffteils | siehe Beispiele | |
| **2** | 2-faches Spülen des sulfonierten Kunststoffteils mit Wasser | 25°C, Eintauchen | je 30 s |
| **3** | Reinigen des Kunststoffteils (mit SLOTOSIT KM 3100) | 25°C, Eintauchen | 2 Min. |
| **4** | 2-faches Spülen mit Wasser | 25°C, Eintauchen | je 30 s |
| **5** | Bekeimen des Kunststoffteils mit Pd(II)-Ionen-Lösung (SLOTOSIT KM 3200) | 25°C, Eintauchen | 3 Min. |
| **6** | 3-faches Spülen mit Wasser | 25°C, Eintauchen | je 30 s |
| **7** | Reduktion der Pd(II)-Ionen zu Pd(0)-Keimen durch Eintauchen in den Reduktor (SLOTOSIT KM 3300) | 25°C, Eintauchen | 2 Min. |
| **8** | 2-faches Spülen mit Wasser | 25°C, Eintauchen | je 30 s |
| **9** | Chemische Abscheidung einer ersten Nickelschicht auf dem Kunststoffteil im Nickelbad (Chemisches Nickelbad SLOTOSIT KM 3400) | 50°C, Eintauchen | 12 Min. |
| **10** | 3-faches Spülen mit Wasser | 25°C, Eintauchen | je 30 s |
| **11** | Galvanische Abscheidung einer zweiten Nickelschicht auf der ersten Nickelschicht (Nickelbad NORMA) | 50°C, 1 A/dm² | 15 Min., 1 - 2 µm |
| **12** | 2-faches Spülen mit Wasser | 25°C, Eintauchen | je 30 s |
| **13** | Galvanische Abscheidung einer Kupferschicht auf die zweite Nickelschicht (SLOTOCOUP CU 1450) | 25°C, 4 A/dm² | 40 Min., 25 - 30 µm |
| **14** | Trocknen | 80°C | 30 Min. |

Die Kunststoffteile wurden erst nach dem Trocknen von dem Gestell genommen und angefasst.

### Bewertung der Beschichtungsergebnisse bzw. der Metallisierung

Das Beschichtungsergebnis wurde für die Beispiele in den Tabellen 2 bis 10 durch Inaugenscheinnahme wie folgt bewertet.
- A1:: Beschichtung ist in Ordnung; glatt und glänzend
- A2:: Beschichtung ist in Ordnung; minimal rau und glänzend
- A3:: Beschichtung ist in Ordnung; leicht rau und glänzend
- A4:: Beschichtung ist in Ordnung; glatt und milchig glänzend
- B1:: Beschichtung zeigt Mängel; leicht fleckig, leicht matt und glänzend
- B2:: Beschichtung zeigt Mängel; fleckig, leicht matt und leicht rau
- B3:: Beschichtung zeigt Mängel; fleckig, matt und leicht rau
- B4:: Beschichtung zeigt Mängel; leicht fleckig, matt und rau
- C:: Beschichtung ist nicht in Ordnung; fleckig, matt und rau
- D:: Beschichtung ist nicht in Ordnung; fleckig, pickelig
- E:: Beschichtung ist nicht in Ordnung; Metallisierung ≤ 95%

### A. Versuche zur Sulfonierung mit SO₃ aus Oleum

### A.1 Beispiele 1 bis 5: Sulfonierung von ABS-Teilen ohne elektrostatische Aufladung

Zur Vorbereitung wurden zunächst Kunststoffteile aus ABS gemäß allgemeiner Vorgehensweise auf einem Edelstahlgestell fixiert, gereinigt und gespült und dann bei 80°C für 16 h getrocknet.

Bei Raumtemperatur (25°C) wurden dann die getrockneten Kunststoffteile mit einem Ionisierungsgebläse entionisiert, indem sie für 1 Minute direkt in den Gasstrom des Ionisierungsgebläses (Ionisierungsgebläse SJ-F2500 der Firma Keyence) gestellt wurden. Direkt im Anschluss wurde die statische Oberflächenspannung bestimmt und die Kunststoffteile am Edelstahlgestell der Sulfonierungsvorrichtung zugeführt.

Die Entionisierung mit SO₂ und die Sulfonierung mit SO₃ erfolgte bei Raumtemperatur (25°C) und Umgebungsdruck in einem trockenen 10 Liter-Dreihalskolben, NS 85/55, der mit einer Gaszufuhr, einer Gasableitung und einem Septum zum Beschicken und zur Entnahme versehen ist. Die Dosierung von SO₂ erfolgte aus einer SO₂-Gasflasche; die zugegebene Menge wurde über die Durchflussrate bestimmt. Der Dreihalskolben wurde jeweils mit trockener synthetischer Luft (Wassergehalt ≤ 2 ppm) und der gewünschten Gasmenge an SO₂ aus einer Druckgasflasche befüllt. Für die Versuche wurden jeweils 10 ml 65%-iges Oleum in dem Kolben vorgelegt und dann der Kolben verschlossen. Es wurde 30 min gewartet, damit sich die Atmosphäre in dem Kolben mit SO₃ anreichern konnte. Anschließend wurde das getrocknete, entionisierte Kunststoffteil mit dem Gestell in den Kolben eingeführt und für die angegebene Zeitdauer mit SO₃ und SO₂, wie in Tabelle 2 angegeben, behandelt.

Nach beendeter Reaktionszeit wurde das Septum entfernt und das Gestell aus der Gasatmosphäre genommen. Anschließend wurde das Kunststoffteil gemäß der allgemeinen Vorgehensweise metallisiert und die Qualität der Metallschicht beurteilt. Die Ergebnisse sind in Tabelle 2 zusammengefasst.

**Tabelle 2**

| **Nr.** | **Zeit (s)** | **SO₂ (mg/dm³)** | **statische Spannung der Oberfläche vor der Behandlung mit SO₂ und SO₃** | **Beschichtung** |
|---|---|---|---|---|
| **1** | 30 | 5 | < 50 V | A1 |
| **2** | 30 | 20 | < 50 V | A1 |
| **3** | 30 | 50 | < 50 V | A1 |
| **4** | 30 | 150 | < 50 V | A1 |
| **5** | 30 | 250 | < 50 V | A1 |

Aus den Beispielen 1 bis 5 ist erkennbar, dass nach dem erfindungsgemäßen Verfahren mit einer Vorbehandlung durch ein Ionisierungsgebläse und eine weitere Entladung durch SO₂ sehr gute Sulfonierungsergebnisse erhalten werden können, was durch die hohe Qualität der Metallisierung belegt ist. Selbst bei einer hohen SO₂-Konzentration von 250 mg/dm³ in Beispiel 5 wurde kein nachteiliger Einfluss auf die Sulfonierung und die anschließende Metallisierung gefunden. Insgesamt wurden keine störenden Nebenreaktionen durch das SO₂ beobachtet.

### A.2 Beispiele 6 bis 10: Sulfonierung von ABS-Teilen bei etwa 500 V statischer Oberflächenspannung

Für die Beispiele 6 bis 10 wurden die Kunststoffteile, wie bei der allgemeinen Vorgehensweise beschrieben, gereinigt und getrocknet.

Es wurde nach dem Trocknen keine Entionisierung mit einem Ionisierungsgebläse durchgeführt, sondern es wurde auf dem jeweiligen Kunststoffteil gezielt eine statische Oberflächenspannung erzeugt. Hierfür wurde das Kunststoffteil mit Mikrofaserhandschuhen aus Kevlar®, beidseitig mit beiden Händen für ca. 5 Sekunden gerieben. Die Aufladung bzw. die statische Oberflächenspannung wurde direkt vor dem Einbringen in die Sulfonierungsvorrichtung bestimmt.

Die gemessene statische Oberflächenspannung betrug in den Beispielen 6 bis 10 etwa 500 V.

Wie in den Beispielen 1 bis 5 beschrieben, wurde für eine Dauer von 30 s in einem Dreihalskolben mit Oleum als SO₃-Quelle sulfoniert und dabei die Konzentration von SO₂, wie unten in Tabelle 3 angegeben, variiert. Anschließend wurden die Kunststoffteile gemäß allgemeiner Vorgehensweise metallisiert und die Metallisierung durch Inaugenscheinnahme beurteilt. Die Ergebnisse sind in Tabelle 3 zusammengefasst.

**Tabelle 3**

| **Nr.** | **Zeit (s)** | **SO₂ (mg/dm³)** | **statische Spannung der Oberfläche vor der Behandlung mit SO₂ und SO₃** | **Beschichtung** |
|---|---|---|---|---|
| **6*** | 30 | 0 | 480 V | B1 |
| **7*** | 30 | 2 | 460 V | B1 |
| **8** | 30 | 5 | 470 V | A2 |
| **9** | 30 | 20 | 510 V | A1 |
| **10** | 30 | 50 | 500 V | A1 |

| | | | | |
|---|---|---|---|---|
| * Vergleichsbeispiel | | | | |

Bei den Beispielen 6 und 7 wurden einige Mängel in der Metallschicht beobachtet, die auf eine Beeinträchtigung der Sulfonierung durch die elektrostatischen Ladungen auf dem Kunststoffteil schließen lassen. Bei den Beispielen 6 und 7 lag die SO₂-Konzentration unter 5 mg/dm³; es sind daher Vergleichsbeispiele. Dahingegen wurde im Beispiel 8 bereits durch eine Zugabe von 5 mg/dm³ SO₂ zum Gasgemisch ein deutlich verbessertes Beschichtungsergebnis erzielt, sodass auf eine gleichmäßigere Sulfonierung geschlossen werden kann. Mithin wurde festgestellt, dass mit einer SO₂-Konzentration von 5 mg/dm³ bereits statische Oberflächenspannungen von 500 V effektiv und rasch abgeführt werden können, sodass auch bei diesen kurzen Reaktionszeiten eine gleichmäßige Sulfonierung des Kunststoffteils erfolgt. In den Beispielen 9 und 10 wurde bei etwas höheren SO₂-Konzentrationen nochmals eine Verbesserung bei der Qualität der abgeschiedenen Metallschicht beobachtet, was auf eine besonders gleichmäßige Sulfonierung schließen lässt.

### A.3 Beispiele 11 bis 14: Sulfonierung von ABS-Teilen bei etwa 1000 V statischer Oberflächenspannung

Die Versuchsdurchführung der Beispiele 11 bis 14 erfolgte analog zu den Beispielen 6 bis 10. Die nach gezielter elektrostatischer Aufladung der Kunststoffteile (ca. 10 s Reiben mit Mikrofaserhandschuhen aus Kevlar®) gemessene statische Spannung der Oberfläche betrug in den Beispielen 11 bis 14 etwa 1000 V, also 1,0 kV. Die Ergebnisse nach der Metallisierung sind in Tabelle 4 zusammengefasst.

**Tabelle 4**

| **Nr.** | **Zeit (s)** | **SO₂ (mg/dm³)** | **statische Spannung der Oberfläche vor der Behandlung mit SO₂ und SO₃** | **Beschichtung** |
|---|---|---|---|---|
| **11*** | 30 | 0 | 1030 V | C |
| **12*** | 30 | 2 | 990 V | C |
| **13** | 30 | 20 | 1010 V | A2 |
| **14** | 30 | 50 | 1000 V | A2 |

| | | | | |
|---|---|---|---|---|
| * Vergleichsbeispiel | | | | |

Die Beispiele 11 und 12 zeigen, dass bei einer vergleichsweise hohen statischen Oberflächenspannung von etwa 1000 V nur eine mit erheblichen Mängeln behaftete Metallschicht abgeschieden wird. Diese Ergebnisse zeigen, dass bei einer beträchtlichen elektrostatischen Aufladung des Kunststoffteils nur noch eine ungleichmäßige Sulfonierung erfolgt. Im Gegensatz hierzu wurde durch den gezielten Einsatz von SO₂ im Gasgemisch in den Beispielen 13 und 14 trotz der hohen statischen Oberflächenspannung ein gutes Metallisierungsergebnis erzielt, sodass auf eine gleichmäßige Sulfonierung zurückgeschlossen werden kann.

### B. Versuche zur Sulfonierung mit SO₃ aus SO₂-Oxidation

### B.1 Beispiele 15 bis 18: Sulfonierung von ABS-Teilen bei etwa 500 V statischer Oberflächenspannung

Zur Vorbereitung wurden zunächst Kunststoffteile aus ABS, wie in der allgemeinen Vorgehensweise beschrieben, auf einem Edelstahlgestell fixiert, gereinigt und gespült und anschließend bei 80°C für 16 h getrocknet.

Bei Raumtemperatur (25°C) wurde auf den Kunststoffteilen gezielt eine statische Oberflächenspannung erzeugt. Hierfür wurde das entsprechende Kunststoffteil jeweils mit Mikrofaserhandschuhen aus Kevlar® beidseitig mit beiden Händen ca. 5 Sekunden gerieben und anschließend die Aufladung bzw. die Oberflächenspannung direkt vor dem Einbringen in die Sulfonierungsvorrichtung bestimmt. Die gemessene statische Oberflächenspannung betrug in den Beispielen 15 bis 18 etwa 500 V.

Die Entionisierung mit SO₂ und die Sulfonierung mit SO₃ erfolgte bei 50°C und Umgebungsdruck in einem trockenen 10 Liter-Dreihalskolben, der mit einer Gaszufuhr, einer Gasableitung und einem Septum zum Beschicken und zur Probenentnahme versehen ist. Für die Sulfonierung wurde ein SO₃-haltiges Gasgemisch aus SO₂ und trockener synthetischer Luft (H₂O ≤ 2 ppm) erzeugt und bei einem Gasfluss von 300 Liter/h eingeleitet. Hierfür wurde ein SO₃-Generator der Firma Pentol für den Laborbetrieb verwendet. Durch Steuerung der Reaktion zur SO₃-Herstellung wurde der Gehalt an SO₂ und SO₃ in dem Gasgemisch jeweils eingestellt. Die Umsatzraten zu SO₃ wurden dabei mit einem SO₃-Analysator (SO₃-Monitor) der Firma Pentol bestimmt. Der Dreihalskolben wurde jeweils mit der unten angegebenen Menge an SO₂ und SO₃ befüllt, was über den Analysator eingestellt wurde.

Es wurden für die Beispiele 15 bis 18 unterschiedliche Mengen an SO₂ eingesetzt und dann jeweils 35 mg/dm³ SO₃ erzeugt, sodass unterschiedliche Mengen an SO₂, wie in Tabelle 5 angegeben, in den Gasgemischen der Beispiele 15 bis 18 vorlagen. Eine SO₂-Menge von < 1 mg/dm³ entspricht dabei einem maximalen Umsatz (> 99%) von SO₂ zu SO₃, wobei nur ein unvermeidbarer Restgehalt an SO₂ vorhanden war.

Sodann wurde der Kolben geöffnet, das Gestell in den Kolben eingebracht und sogleich der Kolben mittels des Septums luftdicht geschlossen. Nach beendeter Reaktionszeit wurde das Septum entfernt, das Gestell aus der Gasatmosphäre genommen, und die Kunststoffteile gemäß allgemeiner Vorgehensweise metallisiert.

Die Beispiele 15 bis 18 wurden also mit einem SO₃-Gehalt von 35 mg/dm³ durchgeführt und dabei die vorhandene SO₂-Menge variiert. Die Ergebnisse sind in Tabelle 5 zusammengefasst.

**Tabelle 5**

| **Nr.** | **Zeit (s)** | **SO₃ (mg/dm³)** | **SO₂ (mg/dm³)** | **statische Spannung der Oberfläche vor der Behandlung mit SO₂ und SO₃** | **Beschichtung** |
|---|---|---|---|---|---|
| **15*** | 60 | 35 | < 1 | 500 V | C |
| **16** | 60 | 35 | 5 | 510 V | A4 |
| **17** | 60 | 35 | 20 | 520 V | A1 |
| **18** | 60 | 35 | 50 | 490 V | A1 |

| | | | | | |
|---|---|---|---|---|---|
| * Vergleichsbeispiel | | | | | |

Im Beispiel 15 wurde eine mit Mängeln behaftete Metallschicht auf dem Kunststoffteil beobachtet, sodass auf eine ungleichmäßige Sulfonierung des Kunststoffteils geschlossen werden kann. Die Ursache hierfür sind nicht ausreichend abgeführte elektrostatische Ladungen. Beispiel 16 zeigt, dass eine statische Oberflächenspannung von ca. 500 V bereits mit einem Gehalt von 5 mg/dm³ SO₂ im Gasgemisch effektiv abgeleitet werden kann. Es wurde ein deutlich verbessertes Metallisierungsergebnis erhalten, was auf eine gleichmäßigere Sulfonierung des Kunststoffteils schließen lässt. In den Beispielen 17 und 18 wurde dann bei höheren SO₂-Konzentrationen nochmals eine Verbesserung erzielt.

### B.2 Beispiele 19 bis 21: Sulfonierung von ABS-Teilen bei etwa 1000 V statischer Oberflächenspannung

Die Beispiele 19 bis 21 wurden analog zu den Beispielen 15 bis 18 durchgeführt. Wie dort beschrieben, wurde eine gezielte elektrostatische Aufladung der Kunststoffteile vorgenommen, wobei ca. 10 Sekunden mit Mikrofaserhandschuhen aus Kevlar® gerieben wurde.

Die Reaktionszeiten und die jeweiligen SO₃- und SO₂-Konzentrationen sind unten angegeben. Die gemessene statische Spannung der Oberfläche betrug in den Beispielen 19 bis 21 etwa 1000 V. Es wurde gemäß der allgemeinen Vorgehensweise metallisiert. Die Ergebnisse sind in Tabelle 6 zusammengefasst.

**Tabelle 6**

| **Nr.** | **Zeit (s)** | **SO3 (mg/dm³)** | **SO₂ (mg/dm³)** | **statische Spannung der Oberfläche vor der Behandlung mit SO₂ und SO₃** | **Beschichtung** |
|---|---|---|---|---|---|
| **19*** | 60 | 72 | < 1 | 1010 V | C |
| **20** | 60 | 72 | 50 | 990 V | A4 |
| **21** | 60 | 72 | 100 | 1010 V | A4 |

| | | | | | |
|---|---|---|---|---|---|
| * Vergleichsbeispiel | | | | | |

Wie erwartet, wurde ohne gezielten SO₂-Einsatz im Beispiel 19 kein zufriedenstellendes Metallisierungsergebnis erhalten. Bei der recht hohen statischen Oberflächenspannung von ca. 1000 V wurden in den Beispielen 20 und 21 wiederum gute Beschichtungsergebnisse erzielt. Somit wurde gezeigt, dass auch hohe statische Oberflächenspannungen durch den Einsatz von SO₂ reduziert werden können, was zu einer gleichmäßigeren Sulfonierung und mithin zu einer gleichmäßigeren Metallisierung führt.

### B.3 Beispiele 22 bis 24: Sulfonierung von ABS-Teilen mit hoher SO₃-Konzentration bei etwa 500 V statischer Oberflächenspannung

Die Beispiele 22 bis 24 wurden analog zu den Beispielen 15 bis 18 durchgeführt. Die SO₃-Konzentration wurde auf 178 mg/dm³ eingestellt und die Reaktionszeit auf 30 s verkürzt. Eine SO₂-Menge von < 2 mg/dm³ entspricht dabei einem maximalen Umsatz (> 99%) von SO₂ zu SO₃, sodass nur ein unvermeidbarer Restgehalt an SO₂ vorhanden ist. Es wurde gemäß allgemeiner Vorgehensweise metallisiert. Die Ergebnisse sind in Tabelle 7 zusammengefasst.

**Tabelle 7**

| **Nr.** | **Zeit (s)** | **SO₃ (mg/dm³)** | **SO₂ (mg/dm³)** | **statische Spannung der Oberfläche vor der Behandlung mit SO₂ und SO₃** | **Beschichtung** |
|---|---|---|---|---|---|
| **22*** | 30 | 178 | <2 | 500 V | D |
| **23** | 30 | 178 | 20 | 480 V | A3 |
| **24** | 30 | 178 | 50 | 520 V | A3 |

| | | | | | |
|---|---|---|---|---|---|
| * Vergleichsbeispiel | | | | | |

Die Beispiele 23 und 24 zeigen, dass auch bei einer erhöhten SO₃-Konzentration durch Einsatz von SO₂ im Gasgemisch verbesserte Beschichtungsergebnisse erzielt werden können. Ohne eine ausreichende SO₂-Konzentration bei der Sulfonierung wurde im Beispiel 22 eine fehlerhafte Metallisierung erhalten.

### B.4 Beispiele 25 bis 27: Sulfonierung von ABS-Teilen mit hoher SO₃-Konzentration bei etwa 1000 V statischer Oberflächenspannung.

Die Beispiele 25 bis 27 wurden analog zu den Beispielen 15 bis 18 durchgeführt. Nach gezielter elektrostatischer Aufladung wurden statische Oberflächenspannungen von etwa 1000 V gemessen. Die Reaktionszeit und die SO₃- und SO₂-Konzentrationen wurden, wie unten angegeben, gewählt. Es wurde gemäß allgemeiner Vorgehensweise metallisiert und dann die Qualität der Metallisierung beurteilt. Die Ergebnisse sind in Tabelle 8 zusammengefasst.

**Tabelle 8**

| **Nr.** | **Zeit (s)** | **SO₃ (mg/dm³)** | **SO₂ (mg/dm³)** | **statische Spannung der Oberfläche vor der Behandlung mit SO₂ und SO₃** | **Beschichtung** |
|---|---|---|---|---|---|
| **25*** | 30 | 178 | <2 | 1010 V | C |
| **26** | 30 | 178 | 20 | 1000 V | A2 |
| **27** | 30 | 178 | 50 | 1020 V | A4 |

| | | | | | |
|---|---|---|---|---|---|
| * Vergleichsbeispiel | | | | | |

In den Beispielen 26 und 27 konnten auch bei der recht hohen Oberflächenspannung von etwa 1000 V durch den gezielten Einsatz von SO₂ im Gasgemisch gute Beschichtungsergebnisse erzielt werden. Es wurde eine deutliche Verbesserung gegenüber Beispiel 25 beobachtet, was auf eine gleichmäßigere Sulfonierung der Kunststoffteile schließen lässt.

### C. Sulfonierung von ABS-Teilen mit sich aufbauender SO₃-Konzentration

### C.1 Beispiele 28 bis 69: Sulfonierung von ABS-Teilen bei etwa 500 V bzw. etwa 1000 V statischer Oberflächenspannung

Die Kunststoffteile wurden gemäß allgemeiner Vorgehensweise gereinigt und getrocknet. Sodann wurden die Kunststoffteile bei Raumtemperatur mit Mikrofaserhandschuhen aus Kevlar® beidseitig mit beiden Händen ca. 5 bzw. 10 Sekunden gerieben und anschließend die Aufladung bzw. die statische Oberflächenspannung direkt vor dem Einbringen der Kunststoffteile in die Sulfonierungsvorrichtung bestimmt.

Für die Reaktionen wurde ein trockener 10 Liter-Dreihalskolben, der mit einer Gaszufuhr, einer Gasableitung und einem Septum zum Beschicken und zur Probenentnahme versehen ist, verwendet. Der Kolben wurde zunächst 0,5 h mit trockener synthetischer Luft (H₂O ≤ 2 ppm) bei 100 Liter/h gespült.

Danach wurde das Gestell mit dem Kunststoffteil in den Kolben eingebracht und der Kolben mittels eines Septums verschlossen. Anschließend wurde ein SO₃-haltiges Gasgemisch in den Kolben bei einem Gasfluss von 300 Liter/h geleitet, um das Kunststoffteil bei 50°C und Umgebungsdruck zu sulfonieren. Das Gasgemisch wurde, wie in den Beispielen 15 bis 18 beschrieben, durch Oxidation von SO₂ in trockener synthetischer Luft bereitgestellt. In Tabelle 9 sind die SO₃- und SO₂-Konzentrationen des eingeleiteten Gasgemischs angegeben. Die Mengen an SO₃ und SO₂ im Kolben wurden also kontinuierlich durch Verdrängung der synthetischen Luft mit dem eingeleiteten Gasgemisch erhöht.

Die Ergebnisse nach Metallisierung gemäß allgemeiner Vorgehensweise sind in Tabelle 9 zusammengefasst.

**Tabelle 9**

| **Nr.** | **Zeit (s)** | **SO₃ (mg/dm³)** | **SO₂ (mg/dm³)** | **statische Spannung der Oberfläche vor der Behandlung mit SO₂ und SO₃** | **Beschichtung** |
|---|---|---|---|---|---|
| **28*** | 240 | 72 | < 1 | 520 V | C |
| **29** | 240 | 72 | 5 | 510 V | A1 |
| **30*** | 240 | 72 | < 1 | 1020 V | C |
| **31** | 240 | 72 | 20 | 980 V | A2 |

| | | | | | |
|---|---|---|---|---|---|
| * Vergleichsbeispiel | | | | | |

In den Beispielen 28 und 30 wurden bei etwa 500 V bzw. etwa 1000 V statischer Oberflächenspannung eine Metallschicht mit Beschichtungsmängeln erhalten, wie es ohne den gezielten Einsatz von SO₂ zu erwarten war. Durch den Zusatz von SO₂ in den Beispielen 29 und 31 wurden dann trotz der elektrostatischen Aufladung gute Metallisierungsergebnisse erzielt. Mithin zeigen die Beispiele 29 und 31, dass auch bei einer Verfahrensführung, bei der die SO₃- und SO₂-Konzentrationen erst sukzessiv durch Einleiten des Gasgemischs aufbaut wird, erfolgreich elektrostatische Ladungen abgeführt und eine gleichmäßige Sulfonierung der Kunststoffteile erhalten wird.

### D. Versuche zur Sulfonierung von PARA

### D.1 Beispiele 32 bis 36: Sulfonierung von PARA-Teilen bei etwa 500 V statischer Oberflächenspannung

Die Versuchsdurchführung erfolgte analog zu den Beispielen 15 bis 18. Die Kunststoffteile aus PARA wurden also nach dem Trocknen gezielt elektrostatisch aufgeladen und dann mit unmittelbar aus SO₂ erzeugtem SO₃ sulfoniert. Es wurde gemäß allgemeiner Vorgehensweise metallisiert und die Metallisierung durch Inaugenscheinnahme beurteilt. Die Ergebnisse sind in Tabelle 10 zusammengefasst.

**Tabelle 10**

| **Nr.** | **Zeit (s)** | **SO₃ (mg/dm³)** | **SO₂ (mg/dm³)** | **statische Spannung der Oberfläche vor der Behandlung mit SO₂ und SO₃** | **Beschichtung** |
|---|---|---|---|---|---|
| **32*** | 400 | 178 | < 2 | 510 V | C |
| **33** | 400 | 178 | 5 | 530 V | A1 |
| **34** | 400 | 178 | 20 | 490 V | A1 |
| **35** | 400 | 178 | 50 | 500 V | A1 |
| **36** | 400 | 178 | 100 | 510 V | A1 |

| | | | | | |
|---|---|---|---|---|---|
| * Vergleichsbeispiel | | | | | |

Im Beispiel 32 wurde ohne gezielten Einsatz von SO₂ eine fehlerhafte Metallschicht erhalten, was auf eine ungleichmäßige Sulfonierung aufgrund der statischen Oberflächenspannung von etwa 500 V schließen lässt. Durch einen Gehalt von 5 mg/dm³ SO₂ im Gasgemisch und ebenso bei höheren SO₂-Konzentrationen wurden in den Beispielen 33 bis 36 dann sehr gute Metallisierungsergebnisse erzielt. Diese lassen auf eine ausreichende und gleichmäßige Sulfonierung des Kunststoffteils aus PARA schließen.

## Patentansprüche

1. Verfahren zur Sulfonierung eines Kunststoffteils, umfassend:
(A) das Trocknen des Kunststoffteils; und
(B) das Behandeln des getrockneten Kunststoffteils mit einem Gasgemisch, enthaltend SO₂ und SO₃,
wobei die Konzentration von SO₂ in dem Gasgemisch von Schritt (B) mindestens 5 mg/dm³ beträgt und die Konzentration von SO₃ in dem Gasgemisch von Schritt (B) mindestens 10 mg/dm³ beträgt.

2. Verfahren zur Sulfonierung eines Kunststoffteils, umfassend:
(a) das Trocknen des Kunststoffteils;
(b1) das Behandeln des getrockneten Kunststoffteils mit einem ersten Gasgemisch, enthaltend SO₂; und dann
(b2) das Behandeln des Kunststoffteils mit einem zweiten Gasgemisch, enthaltend SO₃,
wobei die Konzentration von SO₂ in dem ersten Gasgemisch von Schritt (b1) mindestens 5 mg/dm³ beträgt und die Konzentration von SO₃ in dem zweiten Gasgemisch von Schritt (b2) mindestens 10 mg/dm³ beträgt.

3. Verfahren zur Sulfonierung eines Kunststoffteils gemäß Anspruch 1 oder 2, bei dem die Wasserkonzentration in dem Gasgemisch von Schritt (B) bzw. in den Gasgemischen von Schritt (b1) und (b2) höchstens 4 g/m³, bevorzugt höchstens 1 g/m³, mehr bevorzugt höchstens 0,1 g/m³ und am meisten bevorzugt höchstens 0,05 g/m³, beträgt.

4. Verfahren zur Sulfonierung eines Kunststoffteils gemäß einem der Ansprüche 1 bis 3, bei dem die Konzentration von SO₂ in dem Gasgemisch von Schritt (B) bzw. in dem Gasgemisch von Schritt (b1) im Bereich von 5 mg/dm³ bis 250 mg/dm³, bevorzugt im Bereich von 15 mg/dm³ bis 150 mg/dm³, mehr bevorzugt im Bereich von 20 mg/dm³ bis 150 mg/dm³ und am bevorzugtesten im Bereich von 30 mg/dm³ bis 150 mg/dm³, liegt.

5. Verfahren zur Sulfonierung eines Kunststoffteils gemäß einem der Ansprüche 1 bis 4, bei dem die Konzentration von SO₃ in dem Gasgemisch von Schritt (B) bzw. in dem zweiten Gasgemisch von Schritt (b2) im Bereich von 10 mg/dm³ bis zu einer Konzentration, die dem Dampfdruck von SO₃ über 65%-igem Oleum bei Raumtemperatur (25°C) entspricht, bevorzugt im Bereich von 10 mg/dm³ bis 400 mg/dm³, mehr bevorzugt im Bereich von 30 mg/dm³ bis 300 mg/dm³ und am bevorzugtesten im Bereich von 50 mg/dm³ bis 200 mg/dm³, liegt.

6. Verfahren zur Sulfonierung eines Kunststoffteils gemäß einem der Ansprüche 1 bis 5, bei dem das Kunststoffteil in Schritt (b1) für eine Dauer von 1 bis 30 s behandelt wird und in Schritt (B) bzw. in Schritt (b2) für eine Dauer von 10 bis 400 s behandelt wird.

7. Verfahren zur Sulfonierung eines Kunststoffteils gemäß einem der Ansprüche 1 bis 6, bei dem die Temperatur des Gasgemischs von Schritt (B) bzw. die Temperatur des Gasgemischs von Schritt (b1) und von Schritt (b2) im Bereich von 20°C bis 100°C liegt.

8. Verfahren zur Sulfonierung eines Kunststoffteils gemäß einem der Ansprüche 1 bis 7, bei dem das SO₃ im Gasgemisch von Schritt (B) bzw. (b2) durch ein Verfahren bereitgestellt wird, bei dem Schwefeldioxid und Sauerstoff mit Hilfe eines Platin- oder Vanadiumpentoxid-Katalysators zu Schwefeltrioxid umgesetzt werden.

9. Verfahren zur Sulfonierung eines Kunststoffteils gemäß einem der Ansprüche 1 bis 8, bei dem das getrocknete Kunststoffteil nach dem Schritt (A) bzw. dem Schritt (a) und vor dem Schritt (B) bzw. dem Schritt (b1) mit einem Ionisierungsgebläse entionisiert wird.

10. Verfahren zur Sulfonierung eines Kunststoffteils gemäß einem der Ansprüche 1 bis 9, bei dem das Kunststoffteil einen Kunststoff umfasst, der aus der Gruppe, bestehend aus Poly-Acrylester-Styrol-Acrylnitril, Poly-Acrylnitril-Butadien-Styrol, Polyamid, Polyarylamid, Polyphtalamid, Polyimid, Polyetherimid, Polyetheretherketon, Polysulfon, Polyethersulfon, Polyphenylensulfid, Polyphenylenoxide, Polyvinylchlorid, Polyethylen, Polypropylen, Polystyrol, syndiotaktisches Polystyrol, Polyester, Polyurethan, Epoxidharze und Epoxidlacke, ausgewählt ist.

11. Verfahren zur Sulfonierung eines Kunststoffteils gemäß einem der Ansprüche 1 bis 10, bei dem das sulfonierte Kunststoffteil mit Wasser und/oder einer Salzlösung gewaschen wird, sodass das sulfonierte Kunststoffteil Sulfonsäuregruppen und/oder Salze davon aufweist.

12. Verfahren zur Herstellung eines metallisierten Kunststoffteils, umfassend:
(I) das Sulfonieren eines Kunststoffteils nach dem Verfahren gemäß einem der Ansprüche 1 bis 11; und dann
(II) das Metallisieren des sulfonierten Kunststoffteils.

13. Verfahren zur Herstellung eines metallisierten Kunststoffteils gemäß Anspruch 12, bei dem Schritt (II) umfasst:
(II-1) das Bekeimen der Oberfläche des sulfonierten Kunststoffteils mit einem Metall;
(II-2) das chemische Abscheiden einer ersten Metallschicht; und
(II-3) optional das galvanische oder chemische Abscheiden von mindestens einer zweiten Metallschicht.

14. Verfahren zur Herstellung eines metallisierten Kunststoffteils gemäß Anspruch 13, wobei das mindestens eine Metall im Schritt (II-1) aus der Gruppe ausgewählt ist, die aus Pd, Ag, Au, Pt, Cu, Co, Ni und Pd/Sn besteht.
